# FASCICULE DE BREVET EUROPEEN

(11) **EP 1 919 760 B1**
(45) Date de publication et mention de la délivrance du brevet: **07.07.2010**
(21) Numéro de dépôt: 06794380.3
(22) Date de dépôt: 01.09.2006
(51) Int. Cl.: B62D 65/02

(54) **SUPPORT DE NERVURE POUR LA FIXATION D'UNE PIÈCE RAPPORTÉE SUR UNE PEAU DE CARROSSERIE D'UN VÉHICULE AUTOMOBILE, ENSEMBLE COMPORTANT UNE TELLE PIÈCE ET UN TEL SUPPORT, ET PROCÉDÉ DE FIXATION D'UNE TELLE PIÈCE RAPPORTÉE**
RIPPENSTÜTZE ZUR BEFESTIGUNG EINES EINSATZES AN EINER AUTOMOBILKAROSSERIEHAUT, MIT DEM EINSATZ VERSEHENE ANORDNUNG UND STÜTZE UND VERFAHREN ZU BEFESTIGUNG DES EINSATZES
RIB SUPPORT FOR FIXING AN INSERT TO A MOTOR VEHICLE BODY SKIN, AN ASSEMBLY PROVIDED WITH SAID INSERT AND SUPPORT AND METHOD FOR FIXING THE INSERT

(30) Priorité: 02.09.2005 FR 0509019
(43) Date de publication de la demande: 14.05.2008
(73) Titulaire: Compagnie Plastic Omnium, 69007 Lyon (FR)
(72) Inventeur: BANRY, Pascal, F-01800 Bourg Saint Christophe (FR); BRIZIN, Jérôme, F-01100 Arbent (FR)
(74) Mandataire: Remy, Vincent Noel Paul
(86) Numéro de dépôt international: PCT/FR2006/002023
(87) Numéro de publication internationale: WO 2007/026080

(56) Documents cités:
- US-A- 4 708 895
- US-A1- 2005 062 308
- PATENT ABSTRACTS OF JAPAN vol. 1998, no. 09, 31 juillet 1998 (1998-07-31) -& JP 10 100817 A (NISSAN MOTOR CO LTD), 21 avril 1998 (1998-04-21)
- PATENT ABSTRACTS OF JAPAN vol. 2000, no. 06, 22 septembre 2000 (2000-09-22) -& JP 2000 074021 A (NISSAN MOTOR CO LTD), 7 mars 2000 (2000-03-07)

## Description

La présente invention concerne un support de nervure pour la fixation d'une pièce rapportée sur une peau de carrosserie d'un véhicule automobile, un ensemble comportant une telle pièce et un tel support, et un procédé de fixation d'une telle pièce rapportée.

On sait fixer certaines pièces décoratives sur une peau de carrosserie, telles que des bandeaux de protection, par simple encliquetage de pattes élastiques, ménagées sur les pièces décoratives, dans des orifices de la peau.

Cependant, cette méthode de fixation n'assure pas toujours une bonne application de la pièce décorative contre la peau.

On prévoit alors des paires de nervures faisant saillie en face arrière de la peau. Dans chaque paire de deux nervures, l'une appartient à la pièce décorative et traverse un orifice ménagé dans la peau, et l'autre appartient à la peau. La fixation de la pièce sur la peau est assurée par solidarisation deux à deux de ces nervures, par agrafage ou par soudure.

Dans cette solution connue, la nervure qui appartient à la peau est issue de moulage avec cette dernière. Elle doit donc être prévue dans l'empreinte du moule de la peau.

Or, si la pièce décorative est facultative sur le véhicule, la présence des nervures peut s'avérer inutile. Et cette présence est même indésirable si les nervures engendrent des marques de retassure sur la face visible de la peau. Dans ce cas, on doit prévoir deux versions de la peau, celle comportant les nervures, qui est destinée à recevoir la pièce décorative, et celle ne comprenant pas de nervures, ne devant pas recevoir la pièce décorative.

Cette solution est tout à fait satisfaisante à la fois techniquement et esthétiquement. En revanche, elle requiert une gestion de différentes versions de peaux, une pour chaque combinaison possible de pièces décoratives facultatives, ce qui entraîne des complications organisationnelles et des coûts industriels non négligeables.

Un support de nervure d'une peau de carrosserie correspondant au préambule de la revendication 1 est connu du document JP 10100817 A.

La présente invention vise à proposer une solution nouvelle qui ne présente pas ces inconvénients, tout en étant au moins aussi satisfaisante techniquement et esthétiquement.

A cet effet, la présente invention a pour objet un support de nervure, destiné à venir s'appliquer contre une face interne d'une peau de carrosserie, au voisinage d'au moins un orifice prévu dans ladite peau pour le passage d'une nervure d'une pièce devant être rapportée sur une face externe visible de ladite peau, opposée à sa face interne, **caractérisé en ce que** ledit support comporte au moins une nervure agencée de manière à faire saillie de la face interne de la peau à proximité d'un orifice de cette peau, lorsque le support est appliqué contre la face interne de la peau, et en ce qu'au moins une nervure de ce support est conformée pour être solidarisée à une nervure correspondante de la pièce rapportée sur ta peau.

Le support selon l'invention est avantageux en ce qu'il procure la ou les nervures à solidariser avec les nervures de la pièce rapportée du côté de la face interne de la peau. Ces nervures n'ont donc pas à être issues de moulage avec la peau.

De ce fait, la gestion de différentes versions de peau est inutile et seule la réalisation d'orifices est requise pour fixer une pièce rapportée. Ces orifices peuvent être obtenus par poinçonnage ou par perçage, par exemple.

Une application particulièrement avantageuse de l'invention est la fixation d'élargisseurs d'aile sur des crosses de pare-chocs ou sur des bordures d'ailes pour des versions tout-terrain ou sport de véhicules existant aussi en version tourisme. Dans un tel cas, tous les véhicules peuvent utiliser la même peau de pare-chocs et les mêmes ailes, mais ceux comportant les élargisseurs peuvent recevoir ces derniers fixés grâce à l'invention sur la peau de pare-chocs et sur les ailes, la seule modification à opérer sur les pièces de carrosserie étant la réalisation d'orifices pour le passage des nervures des élargisseurs.

Dans un mode de réalisation particulier de l'invention, au moins une nervure du support est conformée pour recevoir une agrafe de solidarisation à une nervure correspondante de la pièce rapportée sur la peau.

Dans un autre mode de réalisation, au moins une nervure du support est conformée pour pouvoir être soudée à une nervure correspondante de la pièce montée sur la peau.

L'invention concerne également un ensemble d'une pièce devant être rapportée sur une face externe visible d'une peau de carrosserie, comportant au moins une nervure destinée à passer à travers un orifice prévu dans ladite peau, et d'un support de nervure, distinct de la peau de carrosserie, tel que défini précédemment

La présente invention a également pour objet un procédé de fixation d'une pièce rapportée sur une peau de carrosserie de véhicule automobile **caractérisé en ce qu**'il comporte :
- une étape au cours de laquelle on présente la pièce rapportée sur la peau et on fait passer une nervure de cette pièce par un orifice prévu dans ladite peau,
- une étape au cours de laquelle on applique un support de nervure tel que défini précédemment contre une face interne de la peau de carrosserie au voisinage de l'orifice, et
- une étape au cours de laquelle on solidarise une nervure du support de nervure avec la nervure de la pièce rapportée.

Dans un mode de réalisation particulier de l'invention, on solidarise une nervure du support avec une nervure de la pièce rapportée par agrafage.

Dans un autre mode de réalisation de l'invention, on solidarise une nervure du support avec une nervure de la pièce rapportée par soudage.

L'invention sera mieux comprise à la lecture de la description qui va suivre, donnée uniquement à titre d'exemple et faite en se référant aux dessins annexés dans lesquels :
- la figure 1 est une vue en perspective d'une partie avant de véhicule automobile comportant une peau de carrosserie sur laquelle sont fixées des pièces rapportées selon le procédé de l'invention ;
- la figure 2 est une vue en coupe de l'avant de véhicule automobile de la figure 1 selon les flèches II-II.

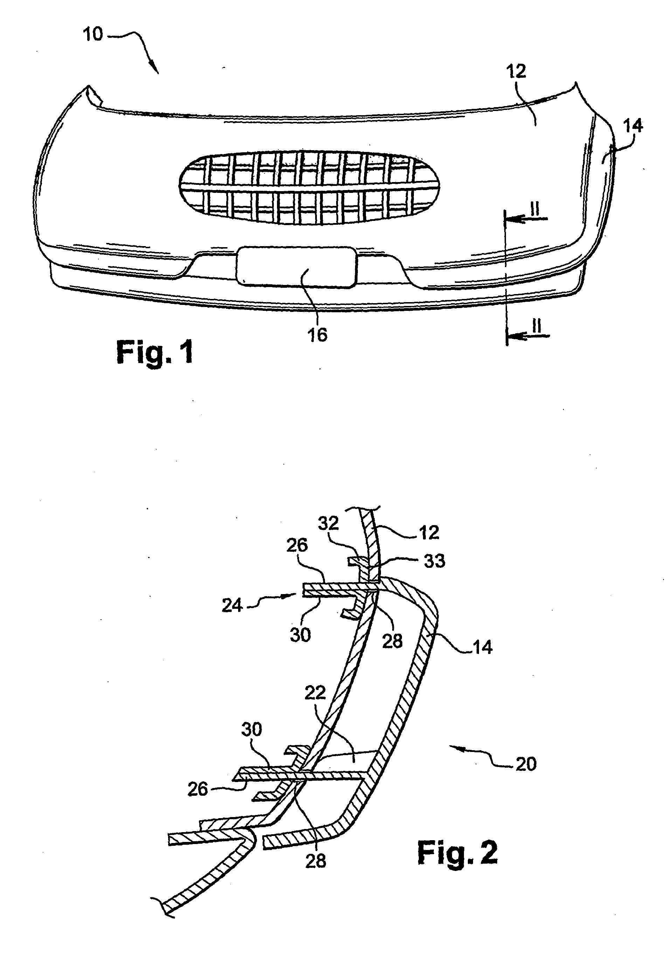

On a représenté sur la figure 1 une partie avant de véhicule automobile, désigné par la référence générale 10.

Cette partie avant 10 comporte une peau de pare-chocs 12, destinée à recevoir des pièces rapportées sur sa face externe visible, par exemple un élargisseur d'aile 14 de véhicule automobile ou un support de plaque 16.

Les pièces rapportées 14, 16 sont positionnées sur la peau 12 à l'aide de moyens de positionnement 20, puis fixés sur cette peau 12 à l'aide de moyens de fixation 24. Ces moyens de positionnement et ces moyens de fixation sont représentés plus en détail sur la figure 2, par exemple dans le cas de la fixation de l'élargisseur d'aile 14.

Les moyens de positionnement 20 comportent des nervures 22 de positionnement, ménagées sur la pièce rapportée 14, destinées à former des entretoises entre cette pièce rapportée 14 et la face externe de la peau 12.

De préférence, les moyens de positionnement comportent également des moyens classiques d'encliquetage (non représentés) de la pièce rapportée 14 sur la peau 12.

Par ailleurs, les moyens de fixation 24 comportent des paires de nervures de fixation. Chaque paire comporte une nervure 26 ménagée sur la pièce rapportée 14 et passant à travers d'orifices 28 correspondants ménagés dans la peau 12, et une nervure 30 ménagées sur un support de nervure 32 appliqué contre une face interne de la peau de carrosserie 12, au voisinage des orifices 28.

A cet effet, le support de nervure 32 a une forme générale de profilé allongé sensiblement horizontalement le long du contour interne de la peau 12, en considérant la peau de pare-chocs 12 montée sur un véhicule automobile. Ainsi, le support de nervure 32 comporte au moins une première partie, formant une embase 33, de préférence relativement mince, comportant une surface de contact destinée à être appliquée contre la face interne de la peau de pare-chocs 12, et au moins une seconde partie formant la nervure 30, s'étendant en saillie de la première partie mince. De préférence, la surface de contact de la première partie mince est complémentaire de la face interne de la peau de pare-chocs 12, de sorte que la nervure 30 garde une direction déterminée et précise lorsque la partie mince est appliquée contre cette face interne.

Les nervures de fixation 26, 30 sont ainsi agencées de manière à faire saillie de la face interne de la peau 12 à proximité les unes des autres, ces nervures 26, 30 étant conformées pour être solidarisée entre elles.

La fixation de la pièce rapportée 14 est alors assurée par solidarisation de ces nervures 26, 30 deux à deux. En effet, les nervures 26, 30 comportent des surfaces complémentaires, par exemple des surfaces planes, aptes à coopérer l'une avec l'autre de façon à favoriser la solidarisation des nervures entre elles. De préférence, on solidarise les nervures 26, 30 entre elles par agrafage ou par soudage de ces nervures.

On notera que le support de nervure 32 est généralement conformé en un cadre adapté à la forme de la face interne de la peau 12, et comportant une pluralité de nervures 30 pour la fixation de la pièce rapportée 14. En variante, on pourrait remplacer ce support 32 en forme de cadre par une pluralité de supports comportant chacun une seule nervure 30.

On notera enfin que le mode de réalisation décrit dans l'exemple ci-dessus n'est pas limitatif et que l'invention peut être réalisée de différentes façons, correspondant au cadre des revendications.

## Revendications

1. Support de nervure (32), destiné à venir s'appliquer contre une face interne d'une peau de carrosserie (12), au voisinage d'au moins un orifice (28) prévu dans ladite peau (12) pour le passage d'une nervure (26) d'une pièce (14) devant être rapportée sur une face externe visible de ladite peau (12), opposée à sa face interne, **caractérisé en ce que** ledit support (32) comporte au moins une nervure (30) agencée de manière à faire saillie de la face interne de la peau (12) à proximité d'un orifice (28) de cette peau (12), lorsque le support (32) est appliqué contre la face interne de la peau (12), **et en ce qu'**au moins une nervure (30) de ce support (32) est conformée pour être solidarisée à une nervure (26) correspondante de la pièce (14) rapportée sur la peau (12).

2. Support de nervure (32) selon la revendication 1, dans lequel au moins une nervure (30) de ce support (32) est conformée pour recevoir une agrafe de solidarisation à une nervure (26) correspondante de la pièce (14) rapportée sur la peau (12).

3. Support de nervure (32) selon la revendication 1 ou 2, dans lequel au moins une nervure (30) de ce support (32) est conformée pour pouvoir être soudée à une nervure (26) correspondante de la pièce (14) rapportée sur la peau (12).

4. Support de nervure (32) selon l'une quelconque des revendications 1 à 3, conformé en un cadre adapté à la forme de la face interne de la peau de carrosserie (12).

5. Ensemble d'une pièce (14) devant être rapportée sur une face externe visible d'une peau de carrosserie (12), comportant au moins une nervure (26) destinée à passer à travers un orifice (18) prévu dans ladite peau (12), et d'un support de nervure (36), distinct de la peau de carrosserie (12), selon l'une quelconque des revendications 1 à 4.

6. Procédé de fixation d'une pièce (14) rapportée sur une peau (12) de véhicule automobile, **caractérisé en ce qu'**il comporte :
- une étape au cours de laquelle on présente la pièce rapportée (14) sur la peau (12) et on fait passer une nervure (26) de cette pièce (14) par un orifice (28) prévu dans ladite peau (12),
- une étape au cours de laquelle on applique un support de nervure (32) selon l'une quelconque des revendications 1 à 4 contre une face interne de la peau de carrosserie (12) au voisinage de l'orifice (28), et
- une étape au cours de laquelle on solidarise une nervure (30) du support de nervure (32) avec la nervure (26) de la pièce rapportée (14).

7. Procédé de fixation selon la revendication 6, dans lequel on solidarise une nervure (30) du support (32) avec une nervure (26) de la pièce rapportée (14) par agrafage.

8. Procédé de fixation selon la revendication 6 ou 7, dans lequel on solidarise une nervure (30) du support (32) avec une nervure (26) de la pièce rapportée (14) par soudage.

## Claims

1. A rib support (32) for pressing against an inside face of a bodywork skin (12) in the vicinity of at least one orifice (28) provided through the skin (12) for passing a rib (26) of a fitting (14) that is to be positioned on a visible outside face of said skin (12) opposite from its inside face, said support (32) being **characterized in that** it includes at least one rib (30) arranged to project from the inside face of the skin (12) close to an orifice (28) in said skin (12) when the support (32) is pressed against the inside face of the skin (12), and **in that** at least one rib (30) of the support (32) is shaped to be secured to a corresponding rib (26) of the fitting (14) in position on the skin (12).

2. A rib support (32) according to claim 1, wherein at least one rib (30) of the support (32) is shaped to receive a staple for securing it to a corresponding rib (26) of the fitting (14) in position on the skin (12).

3. A rib support (32) according to claim 1 or claim 2, wherein at least one rib (30) of the support (32) is shaped to be capable of being welded to a corresponding rib (26) of the fitting (14) in position on the skin (12).

4. A rib support (32) according to any one of claims 1 to 3, shaped as a frame matching the shape of the inside face of the bodywork skin (12).

5. An assembly comprising a fitting (14) that is to be positioned on a visible outside face of a bodywork skin (12) and that includes at least one rib (26) for passing through an orifice (18) provided in said skin (12), together with a rib support (36) distinct from the bodywork skin (12) and according to any one of claims 1 to 4.

6. A method of fastening a fitting (14) in position on a motor vehicle skin (12), the method being **characterized in that** it comprises:
· a step during which the fitting (14) for positioning on the skin (12) is presented and a rib (26) of said fitting (14) is caused to pass through an orifice (28) provided in said skin (12);
· a step during which a rib support (32) according to any one of claims 1 to 4 is pressed against an inside face of the bodywork skin (12) in the vicinity of the orifice (28); and
· a step during which a rib (30) of the rib support (32) is secured to the rib (26) of the fitting (14).

7. A method of fastening according to claim 6, wherein a rib (30) of the support (32) is secured to a rib (26) of the fitting (14) by stapling.

8. A method of fastening according to claim 6 or claim 7, wherein a rib (30) of the support (32) is secured to a rib (26) of the fitting (14) by welding.

## Patentansprüche

1. Rippenträger (32), der dazu bestimmt ist, sich gegen eine Innenseite einer Karosserieverkleidung (12) in der Nähe mindestens einer Öffnung (28) zu legen, die in der Verkleidung (12) für das Durchgehen einer Rippe (26) eines Teils (14) vorgesehen ist, das auf einer sichtbaren Außenseite der Verkleidung, ihrer Innenseite entgegen gesetzt, anzubauen ist, **dadurch gekennzeichnet, dass** der Träger (32) mindestens eine Rippe (30) aufweist, die derart eingerichtet ist, dass sie von der Innenseite der Verkleidung (12) in der Nähe einer Öffnung (28) dieser Verkleidung (12) vorsieht, wenn der Träger (32) gegen die Innenseite der Verkleidung (12) gelegt ist, und dass mindestens eine Rippe (30) dieses Trägers (32) ausgebildet ist, um fest mit einer entsprechenden Rippe (26) des an die Verkleidung (12) angebauten Teils (14) verbunden zu werden.

2. Rippenträger (32) nach Anspruch 1, bei dem mindestens eine Rippe (30) dieses Trägers (32) ausgebildet ist, um eine Heftklammer zum festen Verbinden mit einer entsprechenden Rippe (26) des Teils (14), das auf der Verkleidung (12) angebaut ist, zu erhalten.

3. Rippenträger (32) nach Anspruch 1 oder 2, bei dem mindestens eine Rippe (30) dieses Trägers (32) ausgebildet ist, um an eine entsprechende Rippe (26) des Teils (14), das auf der Verkleidung (12) angebaut ist, geschweißt werden zu können.

4. Rippenträger (30) nach einem der Ansprüche 1 bis 3, ausgebildet als ein Rahmen, der an die Norm der Innenseite der Karosserieverkleidung (12) angepasst ist.

5. Anordnung aus einem Teil (14), das an eine sichtbare Außenseite einer Karosserieverkleidung (12) angebaut werden soll, die mindestens eine Rippe (26) aufweist, die dazu bestimmt ist, durch eine Öffnung (18), die in der Verkleidung (12) vorgesehen ist, durchzugehen, und aus einem Rippenträger (36), der von der Karosserieverkleidung (12) getrennt ist, gemäß einem der Ansprüche 1 bis 4.

6. Verfahren zum Befestigen eines Teils (14), das auf einer Verkleidung (12) eines Kraftfahrzeugs angebaut wird, **dadurch gekennzeichnet, dass** es Folgendes aufweist:
- einen Schritt, bei dem man das Anbauteil (14) auf der Verkleidung (12) anhält und eine Rippe (26) dieses Teils (14) durch eine Öffnung (28), die in der Verkleidung (12) vorgesehen ist, durchgehen lässt,
- einen Schritt, bei dem man einen Rippenträger (32) nach einem der Ansprüche 1 bis 4 gegen eine Innenseite der Karosserieverkleidung (12) in der Nähe der Öffnung (28) anlegt und
- einen Schritt, bei dem man eine Rippe (30) des Rippenträgers (32) mit der Rippe (26) des Anbauteils (14) fest verbindet.

7. Befestigungsverfahren nach Anspruch 6, bei dem man eine Rippe (30) des Trägers (32) mit einer Rippe (26) des Anbauteils (14) durch Heften fest verbindet.

8. Befestigungsverfahren nach Anspruch 6 oder 7, bei dem man eine Rippe (30) des Trägers (32) mit einer Rippe (26) des Anbauteils (14) durch Schweißen fest verbindet.
